# EUROPÄISCHE PATENTANMELDUNG

(11) **EP 1 283 404 A1**
(43) Veröffentlichungstag der Anmeldung: **12.02.2003**
(21) Anmeldenummer: 02016042.0
(22) Anmeldetag: 19.07.2002
(51) Int. Cl.: F41G 1/34, F41G 1/38

(54) **Zielfernrohr mit beleuchtetem Absehen**

(30) Priorität: 31.07.2001 DE 10137399
(71) Anmelder: Tries, Manfred, 89584 Ehingen (DE)
(72) Erfinder: Tries, Manfred, 89584 Ehingen (DE)
(74) Vertreter: Patentanwälte Eisele, Otten, Roth & Dobler

(57) **Zusammenfassung**

Es wird ein Zielfernrohr mit beleuchtetem Absehen vorgeschlagen, bei dem ein unbeabsichtigtes Entleeren des Energiespeichers bzw. der Batterie vermieden wird. Dies wird erfindungsgemäß dadurch erreicht, dass eine automatische Abschalteinheit für das Leuchtmittel des beleuchteten Absehens vorgesehen ist.

## Beschreibung

Die Erfindung betrifft ein Zielfernrohr mit beleuchteten Absehen nach dem Oberbegriff des Anspruchs 1.

Zielfernrohre mit einem beleuchteten Absehen sind beispielsweise aus der Druckschrift DE 199 13 461 bekannt. Derartige Zielfernrohre sind auf der Jagd bei Lichtverhältnissen einsetzbar, in denen das Wild noch sichtbar, das Absehen im Zielfernrohr jedoch nicht mehr ohne weiteres erkennbar ist.

Bei solchen bekannten Zielfernrohren wird das beleuchtete Absehen mit Hilfe eines Schalters ein- und ausgeschaltet. Da bei der Jagd generell und insbesondere nach dem Abgeben eines Schusses die Aufmerksamkeit des Schützen auf das zu jagende Wild konzentriert ist, wird das Abschalten der Beleuchtung des Absehens regelmäßig vergessen. Infolgedessen werden die Energiespeicher, die üblicherweise in Form von Batterien oder Akkumulatoren vorliegen, unbeabsichtigt entleert. Dies trifft vor allem dann zu, wenn das Jagdgewehr mit eingeschalteter Beleuchtung für das Absehen nach der Jagd abgestellt und ohne Kontrolle der Beleuchtungsfunktion auf eine erneute Jagd mitgenommen wird.

Aufgabe der Erfindung ist es, eine Vorrichtung vorzuschlagen, bei der ein solches unbeabsichtigtes Entleeren der Energiespeicher vermieden wird.

Diese Aufgabe wird ausgehend von einem Zielfernrohr der einleitend genannten Art durch die kennzeichnenden Merkmale des Anspruchs 1 gelöst.

Durch die in den Unteransprüchen genannten Merkmale sind vorteilhafte Ausführungen und Weiterbildungen der Erfindung möglich.

Dementsprechend zeichnet sich ein erfindungsgemäßes Zielfernrohr dadurch aus, dass eine automatische Abschalteinheit für das Leuchtmittel des Absehens vorgesehen ist.

Auf diese Weise ist eine dauerhaft eingeschaltete Beleuchtung des Absehens nicht mehr möglich, auch wenn die Aufmerksamkeit des Schützens anderweitig, z.B. durch das Jagdwild gefesselt ist.

In einer besonderen Ausführungsform der Erfindung wird die Abschalteinheit mit einer Uhr versehen, so dass das Abschalten der Beleuchtung zeitabhängig erfolgen kann. Dies stellt eine besonders einfach zu realisierende Abschalteinheit dar, wobei vorzugsweise zusätzlich eine Einstelleinheit zum Einstellen des Zeitintervalls vorgesehen wird, nach dessen Ablauf die Beleuchtung abgeschaltet wird.

In einer anderen Ausführungsform der Erfindung wird die Abschalteinheit mit einem Schusssensor versehen, der erkennt, ob ein Schuss aus dem Gewehr abgegeben wird oder nicht. Sobald ein Schuss abgegeben wurde, ist die Beleuchtung in der Regel nicht mehr erforderlich, so dass sie ausgeschaltet werden kann. Die Abschaltung aufgrund eines abgegebenen Schusses kann ohne weiteres auch mit anderen Abschaltkriterien, z.B. mit einem zeitabhängigen Abschalten wie oben angeführt, kombiniert werden. In der Kombination beider Abschaltkriterien wird die Beleuchtung nach dem zuerst eintretenden Abschaltkriterium abgeschaltet. So wird nach einem Schuss aufgrund des Schusssensors, nach einem erfolglosen Anlegen des Gewehrs aufgrund des Zeitintervalls die Beleuchtung abgeschaltet werden.

In einer anderen Ausführungsform der Erfindung wird ein Lagesensor zum automatischen Abschalten der Beleuchtung bei bestimmten Lageveränderungen vorgesehen. Während das Anvisieren eines Ziels in der Regel in der Nähe der horizontalen Gewehrstellung erfolgt, wird dies beim Transport in eine nahezu vertikale Stellung gebracht. Das Abschalten kann beispielsweise dann erfolgen, wenn das Zielfernrohr einen Winkel zur Vertikalen unterschreitet, in dem üblicherweise nicht geschossen wird.

Das Einschaltelement für das beleuchtete Absehen kann in einer einfachen Ausführungsform auch weiterhin manuell bedienbar ausgebildet werden. Besonders vorteilhaft ist in diesem Zusammenhang jedoch eine Ausbildung als Tippschalter oder Berührungssensor seitlich am Zielfernrohr, so dass eine Bedienung des Einschaltelementes mit einem Finger möglich ist. Diese Bedienung durch Antippen mit einem Finger ermöglicht das Einschalten der Beleuchtung, während sich das Gewehr bereits im Anschlag befindet. Somit wird das Einschalten zu dem spätest möglichen Zeitpunkt genau dann durchgeführt, wenn die Beleuchtung des Absehens erforderlich ist. Hierdurch wird der Stromverbrauch weiter reduziert.

In einer weiteren, besonders benutzerfreundlichen Ausführungsform wird ein Näherungs- oder Berührungssensor für das Einschaltelement und/oder die Abschalteinheit vorgesehen. Mit Hilfe eines solchen Näherungs- bzw. Berührungssensors kann automatisch erfasst werden, ob eine Bedienperson sich mit dem Auge dem Okular des Zielfernrohrs nähert bzw. dieses berührt. Während der Dauer, in der durch das Zielfernrohr anvisiert wird, kann hierbei automatisch die Beleuchtungseinheit des Absehens aktiviert und selbsttätig abgeschaltet werden, wenn das Okular wieder von dem Auge des Schützen entfernt wird. Bei dieser vollautomatischen Ausführungsform kann sich der Schütze voll auf das zu jagende Wild konzentrieren, ohne von der Bedienung der Beleuchtung des Absehens abgelenkt zu werden.

Die halb- oder vollautomatische Funktion der Beleuchtung des Absehens wie oben angeführt, kann zusätzlich mit einem Aktivierungsschalter kombiniert werden, der verhindert, dass die automatische Beleuchtung auch bei ausreichenden Lichtverhältnissen selbsttätig in Betrieb gesetzt werden. Ein solcher Aktivierungsschalter kann wiederum manuell oder selbsttätig in Form eines Helligkeitssensors ausgebildet werden, der erkennt, ob das Umgebungslicht für ein Anvisieren ohne Beleuchtung des Absehens ausreicht, oder ob die automatische Einschalt- und/oder Abschaltfunktion aktiviert werden muss.

Ein Ausführungsbeispiel der Erfindung ist in der Zeichnung dargestellt und wird anhand Figuren nachfolgend näher erläutert.

Im Einzelnen zeigen
- Figur 1: eine Draufsicht auf ein Zielfernrohr für ein Jagdgewehr und
- Figur 2: einen schematischen Querschnitt durch das Zielfernrohr auf Höhe des Absehens.

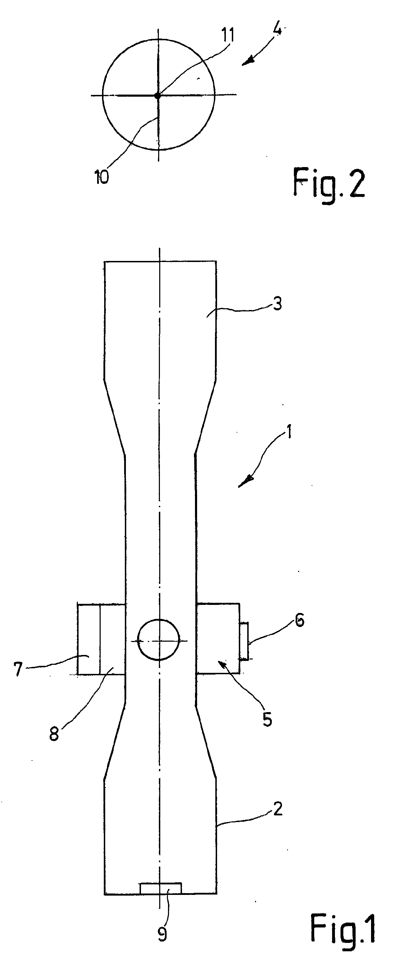

Das Zielfernrohr 1 gemäß Figur 1 umfasst ein Okular 2 und ein Objektiv 3. Im Zwischenbereich ist entlang der Lilie II das sogenannte Absehen 4 (vgl. Figur 2) und in unmittelbarer Nähe eine Beleuchtungseinheit 5 angebracht. An einer Seite der Beleuchtungseinheit 5 ist ein Tippschalter oder Berührungssensor 6 und auf der gegenüberliegenden Seite eine Abdeckung 7 für die verstellvorrichtung des Absehens in dem Gehäuse 8 dargestellt. Der Deckel 7 dient der Entnahme bzw. zum Einsetzen einer oder mehrerer Batterien bzw. Akkumulatoren.

Am Okular ist weiterhin ein Sensor 9 schematisch angedeutet, der die Annäherung oder Berührung eines Schützen an das Okular 2 erfassen kann.

In Figur 2 ist das Absehen 10 in Form eines Kreuzes, in dessen Zentrum ein in der Regel roter Punkt als Zielpunkt 11 angeordnet ist. Dieser Zielpunkt 11 wird bei beleuchtetem Absehen nach dem Einschalten über den Tippschalter 6 beleuchtet.

Die Funktion des erfindungsgemäßen Zielfernrohrs ergibt sich folgendermaßen. Ein nicht näher dargestellter Schütze kann die Beleuchtung des Absehens 4 bei Bedarf durch Antippen an dem Tippschalter 6 einschalten. Durch die Ausgestaltung des Einschaltelementes als Tippschalters ist dies möglich, während das Gewehr bereits im Anschlag ist.

Das Ausschalten der Beleuchtung kann, wie oben angeführt, nach unterschiedlichen Kriterien, z.B. nach einer bestimmten Zeit nach Abgabe eines Schusses, der durch eine nicht näher dargestellten, z.B. akustischen Schusssensor detektiert wird, usw. erfolgen. In einer weitgehend automatisierten Version der Erfindung wird über den Sensor 9 die Annäherung oder Berührung des Auges des Schützen erfasst und damit das Ausschalten der Beleuchtung und gegebenenfalls auch das Einschalten der Beleuchtung automatisch erfasst. Bei einer solchen vollautomatischen Version wird die Funktion des Tippschalters 6 auf die Aktivierung bzw. Deaktivierung der Ein- bzw. Abschaltautomatik reduziert. In einer Weiterbildung der Erfindung kann der Schalter 6 für diese Ausführungsform auch durch einen Helligkeitssensor ersetzt werden.

Wesentlich bei der Erfindung ist, dass die Beleuchtung des Absehens auf jeden Fall dann selbsttätig abgeschaltet wird, wenn dies von dem Schützen vergessen oder aufgrund der Ausgestaltung der Ausführungsform manuell nicht vorgesehen ist.

### Bezugszeichenliste:

- 1: Zielfernrohr
- 2: Okular
- 3: Objektiv
- 4: Absehen
- 5: Beleuchtungseinheit
- 6: Tippschalter oder Berührungssensor
- 7: Abdeckung
- 8: Gehäuse
- 9: Sensor
- 10: Absehen
- 11: Punkt

## Patentansprüche

1. Zielfernrohr mit beleuchtetem Absehen, das ein Leuchtelement und ein Einschaltelement zum Einschalten des Leuchtelementes aufweist, **dadurch gekennzeichnet, dass** eine automatische Abschalteinheit für das Leuchtmittel vorgesehen ist.

2. Zielfernrohr nach Anspruch 1, **dadurch gekennzeichnet, dass** die Abschalteinheit eine Uhr umfasst, um das Leuchtelement zeitabhängig abzuschalten.

3. Zielfernrohr nach einem der vorgenannten Ansprüche, **dadurch gekennzeichnet, dass** die Abschalteinheit einen Sensor zur Schusserkennung aufweist.

4. Zielfernrohr nach einem der vorgenannten Ansprüche, **dadurch gekennzeichnet, dass** der Schusssensor ein Schallsensor ist.

5. Zielfernrohr nach einem der vorgenannten Ansprüche, **dadurch gekennzeichnet, dass** ein Lagesensor vorgesehen ist.

6. Zielfernrohr nach einem der vorgenannten Ansprüche, **dadurch gekennzeichnet, dass** das Einschaltelement manuell bedienbar ist.

7. Zielfernrohr nach einem der vorgenannten Ansprüche, **dadurch gekennzeichnet, dass** das Einschaltelement (6) als Tippschalter oder Berührungssensor ausgebildet ist.

8. Zielfernrohr nach einem der vorgenannten Ansprüche, **dadurch gekennzeichnet, dass** ein Näherungs- oder Berührungssensor (9) am Okular des Zielfernrohrs vorgesehen ist.

9. Zielfernrohr nach einem der vorgenannten Ansprüche, **dadurch gekennzeichnet, dass** eine Steuerung des Einschaltelementes und/oder der Abschalteinheit abhängig von dem Sensorsignal des Berührungs- oder Näherungssensors (9) vorgesehen ist.

10. Zielfernrohr nach einem der vorgenannten Ansprüche, **dadurch gekennzeichnet, dass** ein Aktivierungselement für das automatische Schalten des Leuchtelementes vorgesehen ist.

11. Zielfernrohr nach einem der vorgenannten Ansprüche, **dadurch gekennzeichnet, dass** das Aktivierungselement als manueller Schalter ausgebildet ist und/oder einen Helligkeitssensor umfasst.

12. Gewehr mit Zielfernrohr, **dadurch gekennzeichnet, dass** das Zielfernrohr nach einem der vorgenannten Ansprüche ausgebildet ist.
